# DEMANDE DE BREVET EUROPEEN

(11) **EP 3 932 797 A1**
(43) Date de publication de la demande: **05.01.2022**
(21) Numéro de dépôt: 21181094.0
(22) Date de dépôt: 23.06.2021
(51) Int. Cl.: B64C 1/18, C23F 11/00

(54) **RAIL HYBRIDE POUR PLANCHER D'AERONEF**

(30) Priorité: 29.06.2020 FR 2006798
(71) Demandeur: AIRBUS OPERATIONS (S.A.S.), 31060 Toulouse (FR); Airbus Operations GmbH, 21129 Hamburg (DE)
(72) Inventeur: VASSILAKAKIS, Giuseppe, 31060 TOULOUSE (FR); FANGMEIER, Armin, 21129 HAMBURG (DE)
(74) Mandataire: Gicquel, Olivier Yves Gérard

(57) **Abrégé**

Un rail (12A) pour plancher d'aéronef comprend une semelle supérieure (14) pour supporter un ensemble (42) de panneaux de plancher la recouvrant, et une structure de raidissement inférieure (16). Le rail est formé d'une poutre (30) et d'une protection anticorrosion (32). La poutre est formée au moins d'un corps (30A), réalisé en un premier matériau et définissant la structure de raidissement inférieure (16) et une plateforme supérieure (34). La protection anticorrosion (32) recouvre intégralement une face supérieure (37) de la plateforme supérieure (34) et constitue avec celle-ci la semelle supérieure (14) du rail, ainsi stratifiée. La protection anticorrosion (32) est au moins formée d'une feuille de protection (32A) réalisée en un deuxième matériau plus résistant à la corrosion que le premier matériau et choisi parmi un métal et un matériau composite plastique renforcé de fibres. Un tel rail présente une bonne résistance à la corrosion à un coût modéré.

## Description

### DOMAINE TECHNIQUE

La présente invention concerne un rail pour plancher d'aéronef, du type comprenant une semelle supérieure destinée à supporter un ensemble de panneaux de plancher, et une structure de raidissement inférieure raccordée à la semelle supérieure. Un tel rail, qui ne participe pas à la fixation de sièges mais seulement au support de panneaux de plancher, est parfois dénommé « faux rail ». Dans le cas où un tel rail possède, outre une ou plusieurs régions courantes ayant pour fonction le support de panneaux de plancher à l'instar d'un faux rail, une ou plusieurs régions renforcées adaptées pour la fixation de monuments de cabine (mobilier, parois de séparation), le rail est parfois dénommé « rail galley ».

### ÉTAT DE LA TECHNIQUE ANTÉRIEURE

Au sein des aéronefs, les rails des planchers sont soumis aux phénomènes de corrosion du fait de la présence d'air et d'humidité dans leur environnement.

Contrairement aux rails de fixation de sièges, qui ont fait l'objet d'optimisations pour mieux résister à la corrosion, les faux rails et rails galley, qui sont considérés comme moins critiques et qui présentent en général des formes plus simples, n'ont pas bénéficié de telles optimisations. La protection de tels rails contre la corrosion s'est ainsi limitée à l'enrobage des rails au moyen d'une couche de silicone, matériau mou facilement rayable, ou au moyen d'une couche de peinture, par nature très fine (typiquement 100 microns environ). Dans les deux cas, la protection offerte contre la corrosion se révèle donc limitée dans le temps.

Ainsi, seul le choix d'un matériau particulièrement résistant à la corrosion en tant que matériau constitutif de tels rails a permis d'améliorer la résistance de ces rails à la corrosion de manière durable, toutefois au prix de surcoûts considérables.

### EXPOSÉ DE L'INVENTION

L'invention a pour objet un rail du type ci-dessus qui présente une bonne résistance à la corrosion qui soit durable dans le temps, tout en étant d'un coût limité.

L'invention propose à cet effet un rail pour plancher d'aéronef, comprenant une semelle supérieure destinée à supporter un ensemble de panneaux de plancher la recouvrant, et une structure de raidissement inférieure raccordée à la semelle supérieure, caractérisé en ce qu'il est formé :
- d'une poutre, formée au moins d'un corps réalisé en un premier matériau et définissant la structure de raidissement inférieure et une plateforme supérieure ; et
- d'une protection anticorrosion recouvrant intégralement une face supérieure de la plateforme supérieure moyennant quoi la protection anticorrosion et la plateforme supérieure constituent ensemble la semelle supérieure du rail, la protection anticorrosion étant au moins formée d'une feuille de protection réalisée en un deuxième matériau plus résistant à la corrosion que le premier matériau.

La configuration de la protection anticorrosion permet une protection efficace et durable du rail contre la corrosion, tout en permettant de limiter le coût global du rail.

De préférence, le premier matériau est de l'aluminium ou un alliage d'aluminium.

De préférence, la feuille de protection présente une épaisseur supérieure à 0,2 mm, préférentiellement supérieure à 0,3 mm, et encore plus préférentiellement supérieure à 0,4 mm.

De préférence, le deuxième matériau est choisi parmi le titane ou un alliage de titane, un acier inoxydable, et un matériau plastique.

De préférence, la plateforme supérieure de la poutre et la protection anticorrosion présentent au moins une paire d'orifices respectifs alignés définissant conjointement un passage traversant s'étendant au travers de la semelle supérieure du rail pour un organe de fixation.

De préférence, le rail comprend une douille de protection anticorrosion logée au moins dans l'orifice de la plateforme supérieure de la poutre et délimitant au moins un segment du passage traversant.

De préférence, la douille de protection anticorrosion est encastrée dans la plateforme supérieure et couverte par une partie de la protection anticorrosion formant un pourtour de l'orifice de la protection anticorrosion.

En variante, la douille de protection anticorrosion s'étend au travers de la protection anticorrosion.

De préférence, la poutre comprend en outre un revêtement anticorrosion qui recouvre l'intégralité du corps de la poutre, moyennant quoi le revêtement anticorrosion est intercalé entre le corps de la poutre et la protection anticorrosion au niveau de la semelle supérieure.

De préférence, la protection anticorrosion comprend en outre une couche de liaison intercalée entre la feuille de protection et la plateforme supérieure de la poutre.

De préférence, la couche de liaison est formée d'au moins l'un parmi un mastic, une colle, et un scotch double face.

De préférence, au moins un bord latéral de la plateforme supérieure de la poutre est protégé contre la pénétration de fluides corrosifs entre la plateforme supérieure et la couche de protection anticorrosion au moyen d'un agent d'étanchéité disposé :
- soit dans un espace ménagé entre la protection anticorrosion et la plateforme supérieure, du fait que le bord latéral forme un arrondi à une jonction avec une face supérieure de la plateforme, ou forme un arrondi sur l'intégralité d'un chant de la plateforme ;
- soit sous la forme d'un dépôt de matière rapporté sur un chant plat formé conjointement par le bord latéral de la plateforme supérieure et un bord latéral correspondant de la protection anticorrosion ;
- soit sous la forme d'un dépôt de matière, qui est rapporté sur un chant plat formé au moins par le bord latéral de la plateforme supérieure, et qui s'étend jusqu'à une face inférieure d'un bord latéral de la feuille de protection de la protection anticorrosion se prolongeant en surplomb au-delà dudit chant plat.

L'invention concerne également un plancher pour aéronef, comprenant un ensemble de panneaux, et au moins un rail du type décrit ci-dessus dont la semelle supérieure est recouverte par l'ensemble de panneaux.

L'invention concerne également un aéronef, comprenant au moins un rail du type décrit ci-dessus ou un plancher du type décrit ci-dessus.

L'invention concerne également un procédé de fabrication d'un rail du type décrit ci-dessus pour plancher d'aéronef, comprenant les étapes suivantes :
A. mettre à disposition la poutre, formée au moins du corps réalisé en le premier matériau et définissant la structure de raidissement inférieure et la plateforme supérieure ;
B. mettre à disposition la feuille de protection réalisée en le deuxième matériau plus résistant à la corrosion que le premier matériau ; puis
C. fixer la feuille de protection sur la plateforme supérieure de sorte que la feuille de protection recouvre intégralement la face supérieure la plateforme supérieure.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1 est une vue schématique de côté d'un aéronef ;
- la figure 2 est une vue schématique en perspective d'un faux rail de type connu ;
- la figure 3 est une vue schématique en perspective d'un rail galley de type connu ;
- la figure 4 est une vue schématique en coupe transversale d'un faux rail selon l'invention ;
- la figure 4A est une vue à plus grande échelle d'une partie de la figure 4 ;
- la figure 4B est une vue semblable à la figure 4A illustrant une variante de réalisation de l'invention ;
- la figure 4C est une vue semblable à la figure 4A illustrant une autre variante de réalisation de l'invention ;
- la figure 4D est une vue semblable à la figure 4A illustrant encore une autre variante de réalisation de l'invention ;
- la figure 4E est une vue à plus grande échelle d'une autre partie de la figure 4 ;
- la figure 4F est une vue semblable à la figure 4E illustrant une variante de réalisation de l'invention ;
- la figure 5 est une vue schématique partielle en coupe transversale d'un plancher d'aéronef selon un premier mode de réalisation particulier de l'invention, illustrant notamment un faux rail de ce plancher;
- la figure 5A est une vue à plus grande échelle d'une partie de la figure 5 ;
- la figure 6 est une vue schématique partielle en coupe transversale et en perspective d'un plancher d'aéronef selon un deuxième mode de réalisation particulier de l'invention, illustrant notamment une région courante d'un rail galley de ce plancher ;
- la figure 7 est une vue schématique partielle en coupe transversale et en perspective du plancher d'aéronef selon le deuxième mode de réalisation de l'invention, illustrant notamment une région renforcée du rail galley ;
- la figure 8 est une vue schématique partielle en coupe transversale et en perspective d'un plancher d'aéronef selon un troisième mode de réalisation particulier de l'invention, illustrant notamment une région courante d'un rail galley de ce plancher ;
- la figure 9 est une vue schématique partielle en coupe transversale du plancher d'aéronef selon le troisième mode de réalisation de l'invention, illustrant notamment une région renforcée du rail galley.

Dans l'ensemble de ces figures, des références identiques peuvent désigner des éléments identiques ou analogues.

### EXPOSÉ DÉTAILLÉ DE MODES DE RÉALISATION PRÉFÉRÉS

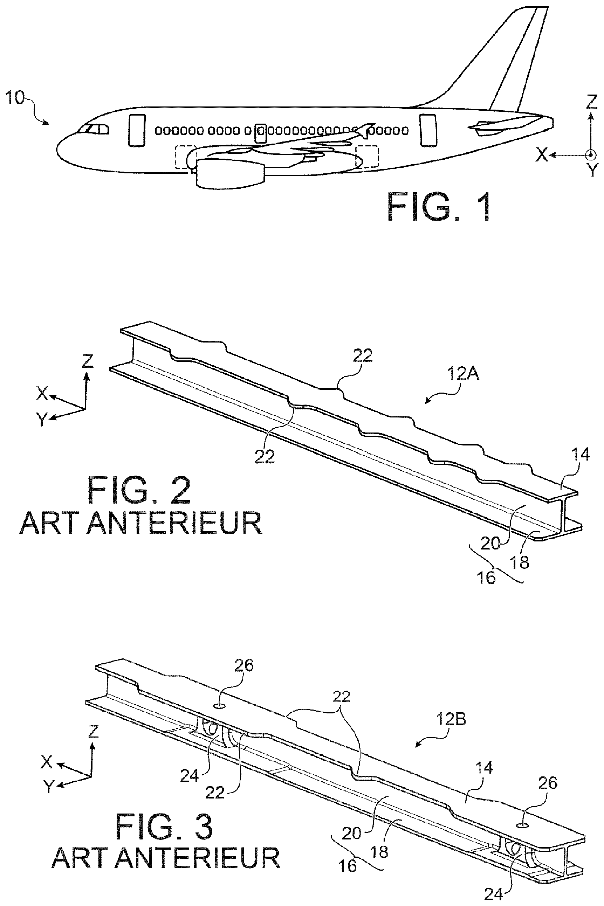

La figure 1 illustre un aéronef 10, par exemple un avion du type destiné au transport commercial de passagers ou de fret, comprenant un plancher formé d'un ensemble de panneaux de plancher reposant sur une structure formée d'un ensemble de rails et de traverses. Certains des rails, appelés « faux rails » et « rails galley », ne participent pas à la fixation de sièges et présentent une semelle supérieure recouverte par l'ensemble de panneaux de plancher, que ladite semelle supérieure supporte, et une structure de raidissement inférieure raccordée à la semelle supérieure. Le recouvrement d'une telle semelle supérieure par l'ensemble de panneaux de plancher implique en général que cette dernière présente une surface supérieure plane.

Dans la présente description, la direction verticale Z, les côtés « supérieur » et « inférieur », de même que les directions « haut » et « bas », sont définis de manière conventionnelle par référence à l'orientation de l'aéronef lorsque celui-ci est au sol. Les directions X et Y sont orientées orthogonalement à la direction verticale Z de manière à définir un référentiel orthonormé. En particulier, la direction X est définie en tant que direction longitudinale des rails, et la direction Y est définie en tant que direction transversale.

Les figures 2 et 3 illustrent respectivement un faux rail 12A et un rail galley 12B, selon des configurations connues. Ces figures permettent d'apercevoir la semelle supérieure 14 destinée à supporter un ou plusieurs panneaux de plancher, et la structure de raidissement inférieure 16, de chacun des rails 12A et 12B. Cette structure de raidissement comporte généralement un talon 18 s'étendant parallèlement à la semelle supérieure 14 et une âme 20 s'étendant orthogonalement à la semelle supérieure 14 et au talon 18 et reliant l'un à l'autre ces deux éléments. Chacun des rails 12A et 12B comprend typiquement des oreilles 22 s'étendant latéralement en saillie de la semelle supérieure 14 pour recevoir des organes de fixation de panneaux de plancher. Le rail galley 12B présente des régions renforcées 24, logeant par exemple des écrous à barillets destinés chacun à recevoir, par exemple via un orifice 26 correspondant formé dans la semelle supérieure 14, un organe de fixation d'un monument, tel qu'un meuble d'office (« galley ») ou une paroi de séparation.

De tels faux rails et rails galley sont habituellement réalisés en aluminium recouvert d'un revêtement anticorrosion prenant la forme d'une fine couche de peinture ou d'une épaisse couche de silicone relativement mou. Un tel revêtement se révèle toutefois relativement fragile, en particulier aisément rayable, et présente par conséquent une efficacité limitée dans le temps, de sorte que des coûts importants sont engendrés par la nécessité de remplacer régulièrement de tels rails.

Pour remédier à ce problème, il a été proposé de réaliser de tels rails en titane afin d'accroître leur résistance à la corrosion. Toutefois, un tel changement de matériau implique un surcoût considérable.

L'invention qui va maintenant être décrite propose une solution permettant une bonne résistance à la corrosion tout en conservant un coût limité.

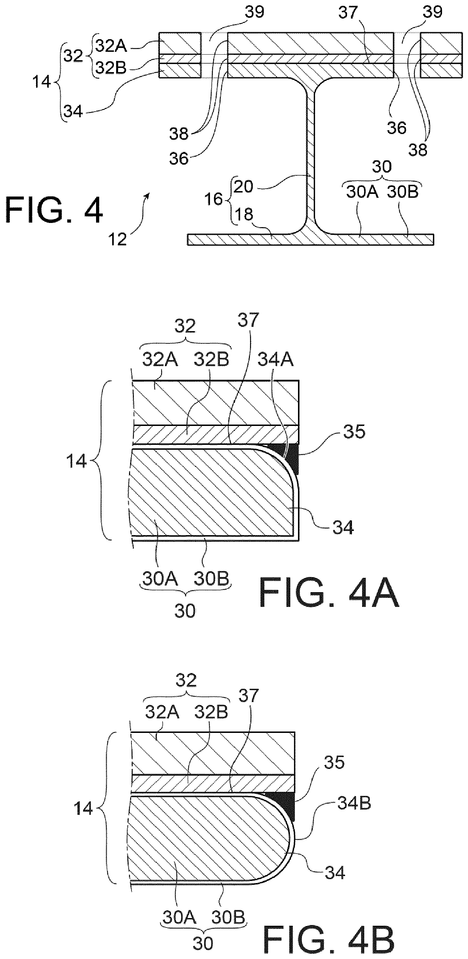

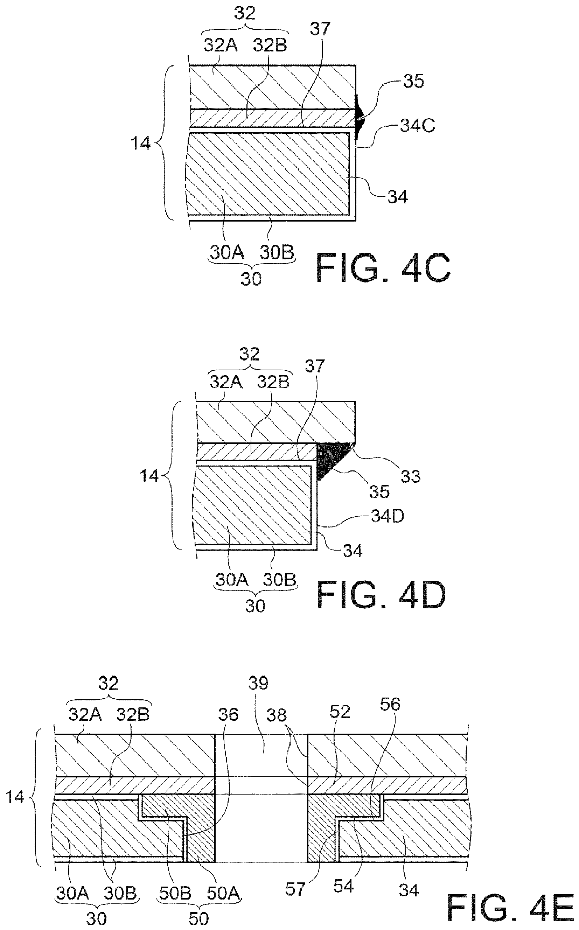

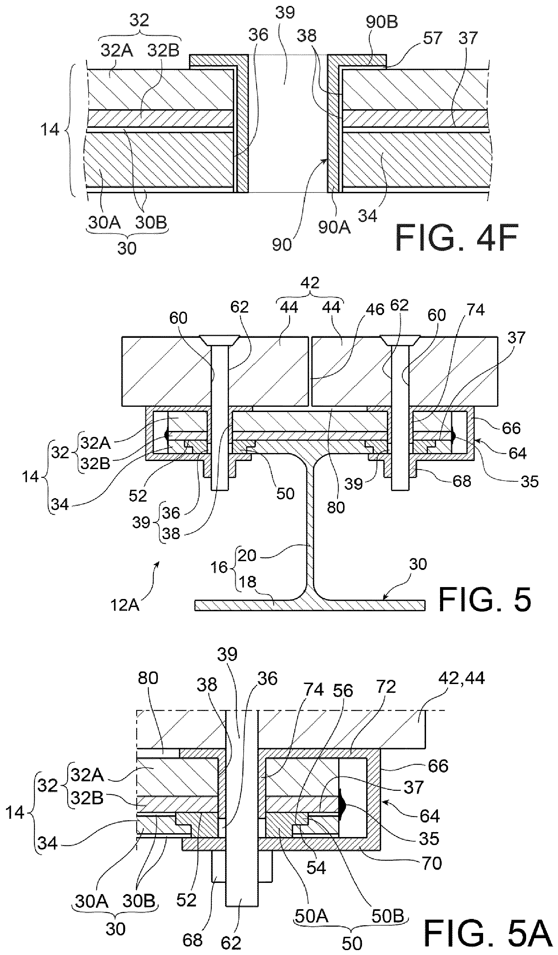

Selon son aspect le plus général, en référence à la figure 4, l'invention propose un rail 12 présentant, comme les rails décrits ci-dessus, une semelle supérieure 14 destinée à supporter un ou plusieurs panneaux de plancher recouvrant ladite semelle supérieure, et une structure de raidissement inférieure 16 raccordée à la semelle supérieure 14 et par exemple semblable à celle décrite en référence aux figures 2 et 3.

Selon l'invention, un tel rail 12 est formé d'une poutre 30 et d'une protection anticorrosion 32 telles que :
- la poutre 30 définit la structure de raidissement inférieure 16 et une plateforme supérieure 34 raccordée à la structure de raidissement inférieure 16 ;
- la poutre 30 est formée au moins d'un corps 30A réalisé en un premier matériau et définissant la structure de raidissement inférieure 16 et la plateforme supérieure 34 ;
- la protection anticorrosion 32 recouvre intégralement une face supérieure 37 de la plateforme supérieure 34, moyennant quoi la protection anticorrosion 32 et la plateforme supérieure 34 constituent ensemble la semelle supérieure 14 du rail ;
- la protection anticorrosion 32 est au moins formée d'une feuille de protection 32A réalisée dans un deuxième matériau plus résistant à la corrosion que le premier matériau.

Cette configuration stratifiée de la semelle supérieure 14, comprenant au moins la plateforme supérieure 34 et la feuille de protection 32A dans un état superposé, permet une protection efficace du rail 12 contre la corrosion, tout en permettant que la poutre 30 soit en un matériau au coût limité. Il faut en effet comprendre, par « feuille de protection », un élément relativement dur et rigide ayant été disposé sur la plateforme supérieure 34, à la différence des revêtements anticorrosion de l'art antérieur qui sont formés de silicone ou de peinture et qui sont obtenus par dépôt sous forme de bande(s) souple (s) ou sous forme fluide sur le rail, de tels revêtements ayant pour inconvénient d'être mous, dans le cas du silicone, ou d'être très minces, dans le cas de la peinture, comme expliqué ci-dessus.

Le premier matériau, dans lequel est réalisé le corps 30A de la poutre, est typiquement de l'aluminium ou un alliage d'aluminium.

Le deuxième matériau, dans lequel est réalisé la feuille de protection 32A de la protection anticorrosion 32, est avantageusement réalisé en un métal plus « noble », c'est-à-dire plus résistant à la corrosion, que le premier matériau, par exemple en titane ou en un alliage de titane, ou un acier inoxydable. Dans d'autres modes de réalisation, le deuxième matériau est réalisé en un matériau plastique, tel qu'un matériau composite plastique composé de fibres, préférentiellement des fibres de verre, noyées dans une résine durcie, ou encore un matériau thermoplastique ou thermodurcissable.

Du fait de l'utilisation de deux matériaux différents, dont les propriétés en termes de résistance à la corrosion et de coût sont exploitées au mieux, un tel rail peut être dénommé « rail hybride ».

La feuille de protection 32A présente de préférence une épaisseur supérieure à 0,2 mm, plus préférentiellement supérieure à 0,3 mm, et encore plus préférentiellement supérieure à 0,4 mm.

Dans des modes de réalisation de l'invention, en référence à la figure 4, la poutre 30 comprend en outre un revêtement anticorrosion 30B qui recouvre l'intégralité du corps 30A de la poutre. En ce qui concerne la semelle supérieure 14, il faut donc comprendre que, dans un tel cas, le revêtement anticorrosion 30B est intercalé entre le corps 30A de la poutre et la protection anticorrosion 32. Dans un tel cas, la poutre 30, formée du corps 30A et du revêtement anticorrosion 30B, est donc assimilable à un rail de type connu.

De plus, dans des modes de réalisation de l'invention, toujours en référence à la figure 4, la protection anticorrosion 32 comprend en outre une couche de liaison 32B intercalée entre la feuille de protection 32A et la plateforme supérieure 34 de la poutre 30. La couche de liaison 32B est donc au contact du revêtement anticorrosion 30B, ou, dans des modes de réalisation qui ne comportent pas ce revêtement, au contact du corps 30A de la poutre.

La couche de liaison 32B assure l'adhésion de la feuille de protection 32A à la plateforme supérieure 34, et est, à cet effet, avantageusement formée d'un mastic, et/ou d'une colle, et/ou d'un scotch double face.

Par ailleurs, la protection de chaque bord latéral de la plateforme supérieure 34 de la poutre 30, notamment contre la pénétration de fluides corrosifs entre la plateforme supérieure 34 et la couche de protection anticorrosion 32, est avantageusement assurée par un agent d'étanchéité 35, tel qu'un mastic ou une colle, disposé :
- soit, dans un espace ménagé entre la protection anticorrosion 32 et la plateforme supérieure 34, du fait que le bord latéral considéré forme un arrondi 34A à la jonction avec la face supérieure de la plateforme (figure 4A) ou forme un arrondi 34B sur l'intégralité du chant de la plateforme (figure 4B) ;
- soit, sous la forme d'un dépôt de matière (figure 4C) rapporté sur un chant plat 34C formé conjointement par le bord latéral considéré de la plateforme supérieure 34 et un bord latéral correspondant de la protection anticorrosion 32 ;
- soit sous la forme d'un dépôt de matière (figure 4D), qui est rapporté sur un chant plat 34D formé par le bord latéral de la plateforme supérieure 34, et le cas échéant, par la couche de liaison 32B de la protection anticorrosion 32, et qui s'étend jusqu'à une face inférieure d'un bord latéral 33 de la feuille de protection 32A de la protection anticorrosion 32 se prolongeant en surplomb au-delà dudit chant plat 34D.

En variante, la face supérieure 37 de la plateforme supérieure 34 peut présenter des bords latéraux recourbés vers le bas jusqu'à une face inférieure de la plateforme supérieure 34, auquel cas la couche de protection anticorrosion 32 suit cette courbure et protège ainsi intrinsèquement les côtés de la plateforme supérieure.

Dans des modes de réalisation de l'invention, en référence à la figure 4, la plateforme supérieure 34 de la poutre 30 et la protection anticorrosion 32 présentent une ou plusieurs paires d'orifices respectifs alignés 36, 38. Deux paires d'orifices de ce type sont ainsi visibles sur la figure 4. Les orifices 36, 38 de chaque paire définissent conjointement un passage traversant 39 au sein de la semelle supérieure 14 du rail 12, permettant le passage d'un organe de fixation (non visible sur la figure 4) destiné, par exemple, à la fixation de panneaux de plancher au rail 12, ou à la fixation de monuments à un plancher comprenant ledit rail 12, comme cela apparaîtra plus clairement dans ce qui suit.

En référence aux figures 4E et 4F, pour chacune des paires d'orifices 36, 38, au moins un segment du passage traversant 39, correspondant à l'orifice 36 de la plateforme supérieure 34, est avantageusement délimité par une douille de protection anticorrosion logée dans l'orifice 36 et permettant d'éviter que le premier matériau constituant la plateforme supérieure 34 ne soit exposé à la corrosion au niveau de la surface interne d'un tel orifice.

Plus particulièrement, la figure 4E illustre une configuration, dite de douille encastrée, dans laquelle une telle douille de protection anticorrosion, référencée 50, est encastrée dans la plateforme supérieure 34 et couverte par une partie 52 de la protection anticorrosion 32 formant un pourtour de l'orifice 38 correspondant de la protection anticorrosion. Dans un tel cas, la douille de protection anticorrosion 50 présente de préférence une portion inférieure 50A de forme cylindrique de révolution, et un rebord supérieur 50B, par exemple de forme annulaire, formant latéralement saillie par rapport à la portion inférieure 50A et définissant un épaulement 54 entre la portion inférieure 50A et le rebord supérieur 50B. De plus, la plateforme supérieure 34 de la poutre 30 présente, autour de l'orifice 36 correspondant, un lamage 56 sur lequel s'appuie l'épaulement 54. Une telle configuration permet la rétention de la douille de protection anticorrosion 50 dans l'orifice 36 correspondant même en l'absence d'organe de fixation dans le passage traversant 39 correspondant.

La figure 4F illustre une autre configuration, dite de douille protubérante, dans laquelle la douille de protection anticorrosion, référencée 90, comporte une portion inférieure 90A, par exemple de forme cylindrique de révolution, qui se prolonge au travers de la protection anticorrosion 32, et un rebord supérieur 90B appliqué sur la protection anticorrosion 32.

De manière générale, une telle douille de protection anticorrosion 50, 90 est réalisée dans un matériau plus résistant à la corrosion que le premier matériau, préférentiellement dans un matériau métallique, par exemple du titane ou un alliage de titane. La douille de protection anticorrosion peut, en variante, être réalisée en polytétrafluoroéthylène (PTFE) ou en tout autre matériau approprié.

Par ailleurs, du mastic 57 (visible uniquement sur les vues à grande échelle des figures 4E et 4F) est avantageusement interposé entre une telle douille et la plateforme supérieure 34 de la poutre 30, dans le cas d'une douille en configuration encastrée, ou entre la douille et l'ensemble de la semelle supérieure 14, dans le cas d'une douille en configuration protubérante. L'interposition du mastic permet, le cas échéant, d'éviter les phénomènes de couplage galvanique entre la douille de protection anticorrosion 50, 90 et la plateforme supérieure 34.

Les figures 5 à 9 illustrent différents exemples d'utilisation du rail selon l'invention.

La figure 5 illustre une partie d'un plancher 40 comprenant au moins un faux rail 12A et un ensemble 42 de panneaux de plancher 44, selon un premier mode de réalisation particulier de l'invention. La figure 5 montre une configuration dans laquelle le faux rail 12A est centré sous la jonction 46 entre deux panneaux de plancher 44 adjacents.

Dans ce mode de réalisation, pour chacune des paires d'orifices 36, 38, l'orifice 36 de la plateforme supérieure 34 de la poutre 30 est délimité par une douille de protection anticorrosion 50 dans une configuration encastrée semblable à celle décrite ci-dessus en référence à la figure 4E.

L'ensemble 42 de panneaux de plancher 44 présente des orifices traversants 60 (dont deux sont visibles sur la figure 5), qui sont respectivement alignés avec des passages traversants 39 de la semelle supérieure 14 du rail 12A, et qui sont traversés respectivement par des vis de fixation, telles que des vis de plancher 62 assurant la fixation des panneaux de plancher 44 sur la semelle supérieure 14.

Dans des modes de réalisation de l'invention tels que celui de la figure 5, le plancher 42 comporte, pour chaque vis de plancher 62, un écrou à suspension encliquetée 64, également dénommé « clip nut » d'après la terminologie anglosaxonne. Un tel écrou 64 comporte une pince 66 conformée pour enserrer la semelle supérieure 14 et supporter une portion d'écrou 68 dans laquelle est vissée la vis de plancher 62 correspondante.

À cet effet, en référence à la figure 5A, la pince 66 présente une section globalement en forme de « C » définissant une patte inférieure 70 agencée sous la semelle supérieure 14 et portant la portion d'écrou 68 qui s'étend vers le bas à partir d'une face inférieure de ladite patte inférieure 70, et une patte supérieure 72 agencée sur la semelle supérieure 14 et portant une douille de centrage 74 s'étendant vers le bas à partir de ladite patte supérieure 72 en étant engagée dans le passage traversant 39 correspondant, éventuellement jusque dans la douille de protection anticorrosion 50.

À titre d'exemple, une bande de remplissage 80, par exemple constituée d'une mousse de silicone auto-adhésive, est en outre agencée sur une région de la semelle supérieure 14 non occupée par les pattes supérieures 72 des écrous 64, de manière à assurer une mise à niveau par rapport aux pattes supérieures 72 ou, tout au moins, à réduire l'écart entre ces dernières et la surface supérieure de la semelle supérieure 14. En variante ou de manière complémentaire, les panneaux de plancher 44 peuvent se déformer de manière à épouser avec plus ou moins de précision le relief créé par les pattes supérieures 72 sur la semelle supérieure 14.

Par ailleurs, en variante, au lieu que la portion d'écrou 68 soit portée par une pince enserrant la semelle supérieure 14, la portion d'écrou 68 peut être portée par une douille insérée à force, depuis le dessous, dans la semelle supérieure 14.

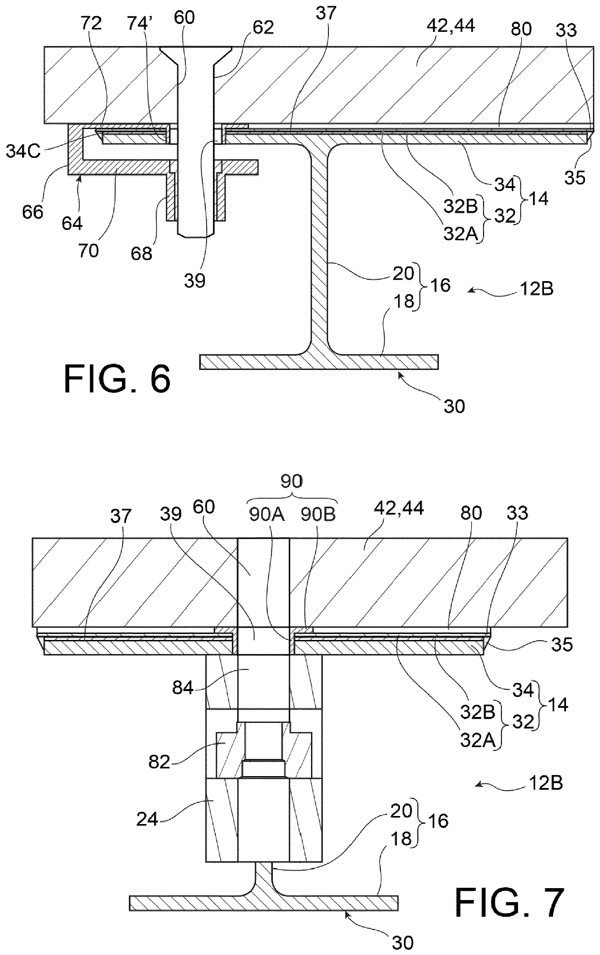

Les figures 6 et 7 illustrent une partie d'un plancher 40 comprenant au moins un rail galley 12B ainsi qu'un ensemble 42 de panneaux de plancher 44 (dont l'un est visible sur les figures), selon un deuxième mode de réalisation particulier de l'invention. Ces figures montrent respectivement une région courante du rail (figure 6) et une région renforcée du rail (figure 7). Les principales différences entre ce mode de réalisation et celui des figures 5 et 5A vont être détaillées ci-après.

Dans l'exemple illustré, une bande de remplissage 80 est interposée entre la semelle supérieure 14 du rail 12B et l'ensemble 42 de panneaux de plancher 44.

Par ailleurs, la protection de chaque bord latéral de la plateforme supérieure 34 de la poutre 30 est ici assurée par un dépôt d'agent d'étanchéité 35 de la manière illustrée sur la figure 4D.

Dans ce mode de réalisation, le rail 12B ne comporte pas de douille encastrée dans la plateforme supérieure 34 comme la douille de protection anticorrosion 50 des figures 5 et 5A.

En revanche, la protection de la surface interne de chaque passage traversant 39, destiné à la réception de vis de plancher 62 en région courante (figure 6), contre la corrosion, est assurée par une douille de centrage 74' d'un écrou à suspension encliquetée 64, ladite douille de centrage 74' s'étendant d'une extrémité à l'autre du passage traversant 39 de la semelle supérieure 14. Une telle douille de centrage 74' constitue ainsi un autre exemple de douille de protection anticorrosion en configuration protubérante.

En ce qui concerne la région renforcée, la figure 7 permet d'apercevoir une telle région, référencée 24, consistant en une portion surépaissie de l'âme 20 logeant un écrou à barillet 82. La région renforcée 24 définit un passage 84, dans le prolongement d'un passage traversant 39 correspondant formé au sein de la semelle supérieure 14 comme expliqué ci-dessus. De plus, le panneau de plancher 44 présente un orifice traversant 60 aligné avec le passage traversant 39 de la semelle supérieure 14 et le passage 84 de la région renforcée 24, pour permettre le passage d'un organe de fixation (non visible sur la figure), tel qu'une vis ou une tige filetée, destiné à la fixation d'un monument au plancher, par coopération avec l'écrou à barillet 82. Dans cet exemple, la région renforcée 24 s'arrête à distance de la semelle inférieure 18.

La protection de la surface interne du passage traversant 39 contre la corrosion est assurée par une douille de protection anticorrosion 90 en configuration protubérante comme décrit ci-dessus en référence à la figure 4F. Cette douille 90 comporte ainsi une portion inférieure 90A s'étend d'une extrémité à l'autre du passage traversant 39 de la semelle supérieure 14, et un rebord supérieur 90B appliqué sur la protection anticorrosion 32 et, le cas échéant, logé dans un évidement de la bande d'étanchéité 80, de sorte que le panneau de plancher 44 correspondant repose conjointement sur la bande d'étanchéité 80 et sur le rebord supérieur 90B.

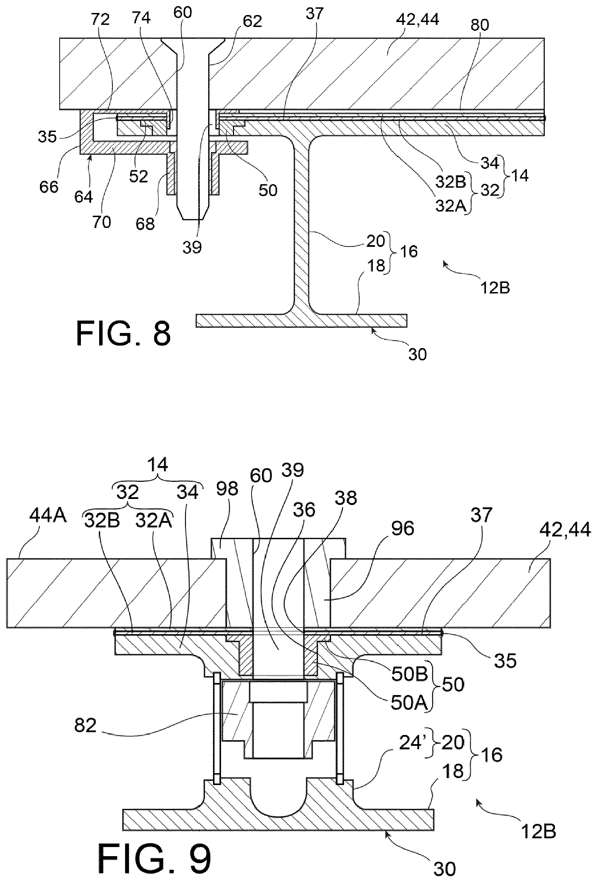

Les figures 8 et 9 illustrent une partie d'un plancher 40 comprenant au moins un rail galley 12B ainsi qu'un ensemble 42 de panneaux de plancher 44 (dont l'un est visible sur les figures), selon un troisième mode de réalisation particulier de l'invention. Ces figures montrent respectivement une partie courante du rail (figure 8) et une région renforcée du rail (figure 9). Les principales différences entre ce troisième mode de réalisation et le deuxième mode de réalisation (figures 6 et 7) vont être détaillées ci-après.

Dans ce mode de réalisation des figures 8 et 9, la protection de chaque bord latéral de la plateforme supérieure 34 de la poutre 30 est par exemple assurée par un agent d'étanchéité 35 disposé de la manière décrite ci-dessus en référence à la figure 4C.

De plus, chaque orifice 36 de la plateforme supérieure 34 de la poutre 30 est délimité par une douille de protection anticorrosion 50 encastrée dans la plateforme supérieure 34 et couverte par une partie de la protection anticorrosion 32 formant un pourtour 52 de l'orifice 38 de la protection anticorrosion, de la même manière que sur la figure 4E.

La région renforcée 24' du rail 12B visible sur la figure 9 est définie par une portion surépaissie de l'âme 20 formant un bloc reliant la semelle inférieure 18 à la plateforme supérieure 34 et logeant par exemple un écrou à barillet 82. Ce bloc raccordé à la plateforme supérieure 34 définit, conjointement avec celle-ci, un orifice traversant 39 aligné avec un orifice traversant 60 du panneau de plancher 44 pour recevoir un organe de fixation (non visible sur la figure) destiné à la fixation d'un monument au plancher. L'orifice traversant 39 est ainsi, en particulier, défini par une paire d'orifices 36, 38 alignés comprenant un orifice 36 formé au travers de la plateforme supérieure 34 et d'une partie supérieure du bloc constituant la région renforcée 24', et un orifice 38 formé au travers de la protection anticorrosion 32, d'une manière analogue à ce qui est expliqué ci-dessus. Dans cet exemple, l'orifice traversant 60 du panneau de plancher 44 est délimité par une douille 96 ayant par exemple un rebord 98 reposant sur une surface supérieure 44A du panneau de plancher 44.

De manière générale, un procédé de fabrication d'un rail 12, 12A, 12B pour plancher d'aéronef du type décrit ci-dessus comprend les étapes suivantes :
A. mettre à disposition la poutre 30, formée au moins du corps 30A réalisé en le premier matériau et définissant la structure de raidissement inférieure 16 et la plateforme supérieure 34 ;
B. mettre à disposition la feuille de protection 32A réalisée en le deuxième matériau plus résistant à la corrosion que le premier matériau ; puis
C. fixer la feuille de protection 32A sur la plateforme supérieure 34 de sorte que la feuille de protection 32A recouvre intégralement la face supérieure 37 de la plateforme supérieure 34.

Le cas échéant, l'étape A comprend, après une sous-étape a1 de mise à disposition du corps 30A, une sous-étape a2 de perçage des orifices 36 au travers de la plateforme supérieure 34 (en l'occurrence, au travers de la partie du corps 30A constituant initialement la plateforme supérieure 34), et, le cas échéant, la formation des lamages 56.

Le cas échéant, l'étape A comprend ensuite une sous-étape a3 d'anodisation du corps 30A puis/ou une sous-étape a4 d'application du revêtement anticorrosion 30B sur le corps 30A (éventuellement après application d'un apprêt sur ce dernier).

Le cas échéant, l'étape B comprend, après une sous-étape b1 de mise à disposition de la feuille de protection 32A, une sous-étape b2 de perçage des orifices 38 au travers de la feuille de protection 32A.

L'étape C comprend par exemple une sous-étape c1 de dépôt de la couche de liaison 32B sur la plateforme supérieure 34, sous forme fluide dans le cas où cette couche de liaison est formée de mastic ou de colle, ou sous forme solide dans le cas où cette couche de liaison est formée de scotch double face.

Dans ce cas, l'étape C comprend ensuite une sous-étape c2 de dépôt de la feuille de protection 32A sur la couche de liaison 32B.

Le cas échéant, l'étape C comprend une sous-étape c1bis de mise en place d'une ou plusieurs douilles de protection anticorrosion 50, en configuration de douille encastrée, dans les orifices 36 de la plateforme supérieure 34, avant la sous-étape c2.

Le cas échéant, l'étape C comprend, après la sous-étape c2, une sous-étape c3 de solidification de la couche de liaison 32B.

Enfin, le cas échéant, l'étape C comprend ensuite une sous-étape c4 de mise en place d'une ou plusieurs douilles de protection anticorrosion 90, en configuration de douille protubérante, dans les passages traversants 39 de la semelle supérieure 14.

## Revendications

1. Rail (12, 12A, 12B) pour plancher d'aéronef, comprenant une semelle supérieure (14) destinée à supporter un ensemble (42) de panneaux de plancher (44) la recouvrant, et une structure de raidissement inférieure (16) raccordée à la semelle supérieure (14), **caractérisé en ce qu'**il est formé :
- d'une poutre (30), formée au moins d'un corps (30A) réalisé en un premier matériau et définissant la structure de raidissement inférieure (16) et une plateforme supérieure (34) ; et
- d'une protection anticorrosion (32) recouvrant intégralement une face supérieure (37) de la plateforme supérieure (34) moyennant quoi la protection anticorrosion (32) et la plateforme supérieure (34) constituent ensemble la semelle supérieure (14) du rail, la protection anticorrosion (32) étant au moins formée d'une feuille de protection (32A) réalisée en un deuxième matériau plus résistant à la corrosion que le premier matériau.

2. Rail selon la revendication 1, dans lequel le premier matériau est de l'aluminium ou un alliage d'aluminium.

3. Rail selon la revendication 1 ou 2, dans lequel la feuille de protection (32A) présente une épaisseur supérieure à 0,2 mm, préférentiellement supérieure à 0,3 mm, et encore plus préférentiellement supérieure à 0,4 mm.

4. Rail selon l'une quelconque des revendications 1 à 3, dans lequel le deuxième matériau est choisi parmi le titane ou un alliage de titane, un acier inoxydable, et un matériau plastique.

5. Rail selon l'une quelconque des revendications 1 à 4, dans lequel la plateforme supérieure (34) de la poutre (30) et la protection anticorrosion (32) présentent au moins une paire d'orifices respectifs (36, 38) alignés définissant conjointement un passage traversant (39) s'étendant au travers de la semelle supérieure (14) du rail (12, 12A, 12B) pour un organe de fixation.

6. Rail selon la revendication 5, comprenant une douille de protection anticorrosion (50, 74', 90) logée au moins dans l'orifice (36) de la plateforme supérieure (34) de la poutre (30) et délimitant au moins un segment du passage traversant (39).

7. Rail selon la revendication 6, dans lequel la douille de protection anticorrosion (50) est encastrée dans la plateforme supérieure (34) et couverte par une partie (52) de la protection anticorrosion (32) formant un pourtour de l'orifice (38) de la protection anticorrosion.

8. Rail selon la revendication 6, dans lequel la douille de protection anticorrosion (74', 90) s'étend au travers de la protection anticorrosion (32).

9. Rail selon l'une quelconque des revendications 1 à 8, dans lequel la poutre (30) comprend en outre un revêtement anticorrosion (30B) qui recouvre l'intégralité du corps (30A) de la poutre, moyennant quoi le revêtement anticorrosion (30B) est intercalé entre le corps (30A) de la poutre et la protection anticorrosion (32) au niveau de la semelle supérieure (14).

10. Rail selon l'une quelconque des revendications 1 à 9, dans lequel la protection anticorrosion (32) comprend en outre une couche de liaison (32B) intercalée entre la feuille de protection (32A) et la plateforme supérieure (34) de la poutre (30).

11. Rail selon la revendication 10, dans lequel la couche de liaison (32B) est formée d'au moins l'un parmi un mastic, une colle, et un scotch double face.

12. Rail selon l'une quelconque des revendications 1 à 11, dans lequel au moins un bord latéral de la plateforme supérieure (34) de la poutre (30) est protégé contre la pénétration de fluides corrosifs entre la plateforme supérieure (34) et la couche de protection anticorrosion (32) au moyen d'un agent d'étanchéité (35) disposé :
- soit dans un espace ménagé entre la protection anticorrosion (32) et la plateforme supérieure (34), du fait que le bord latéral forme un arrondi (34A) à une jonction avec une face supérieure de la plateforme, ou forme un arrondi (34B) sur l'intégralité d'un chant de la plateforme ;
- soit sous la forme d'un dépôt de matière rapporté sur un chant plat (34C) formé conjointement par le bord latéral de la plateforme supérieure (34) et un bord latéral correspondant de la protection anticorrosion (32) ;
- soit sous la forme d'un dépôt de matière, qui est rapporté sur un chant plat (34D) formé au moins par le bord latéral de la plateforme supérieure (34), et qui s'étend jusqu'à une face inférieure d'un bord latéral (33) de la feuille de protection (32A) de la protection anticorrosion (32) se prolongeant en surplomb au-delà dudit chant plat (34D).

13. Plancher pour aéronef, comprenant un ensemble de panneaux (42), et au moins un rail (12, 12A, 12B) selon l'une quelconque des revendications 1 à 12 dont la semelle supérieure (14) est recouverte par l'ensemble de panneaux (42).

14. Aéronef, comprenant au moins un rail (12, 12A, 12B) selon l'une quelconque des revendications 1 à 12 ou un plancher selon la revendication 13.

15. Procédé de fabrication d'un rail (12, 12A, 12B) pour plancher d'aéronef selon l'une quelconque des revendications 1 à 12, comprenant les étapes suivantes :
A. mettre à disposition la poutre (30), formée au moins du corps (30A) réalisé en le premier matériau et définissant la structure de raidissement inférieure (16) et la plateforme supérieure (34) ;
B. mettre à disposition la feuille de protection (32A) réalisée en le deuxième matériau plus résistant à la corrosion que le premier matériau ; puis
C. fixer la feuille de protection (32A) sur la plateforme supérieure (34) de sorte que la feuille de protection (32A) recouvre intégralement la face supérieure (37) la plateforme supérieure (34).
